# FASCICULE DE BREVET EUROPEEN

(11) **EP 1 173 978 B1**
(45) Date de publication et mention de la délivrance du brevet: **21.01.2004**
(21) Numéro de dépôt: 00922739.8
(22) Date de dépôt: 25.04.2000
(51) Int. Cl.: H04N 7/16

(54) **DISPOSITIF DE COMMUNICATION A PEAGE A DOUBLE DESEMBROUILLAGE, NOTAMMENT D'IMAGES DE TELEVISION**
GEBÜHRENPFLICHTIGES KOMMUNIKATIONSGERÄT MIT DOPPELENTSCHLÜSSELUNG, INSBESONDERE FÜR FERNSEHBILDER
DEVICE FOR PAY COMMUNICATION WITH DOUBLE DESCRAMBLING, IN PARTICULAR OF TELEVISION IMAGES

(30) Priorité: 28.04.1999 FR 9905366
(43) Date de publication de la demande: 23.01.2002
(73) Titulaire: Thomson multimedia Digital France, 92100 Boulogne Billancourt (FR)
(72) Inventeur: BOREL, Jean-Philippe, F-78000 Versailles (FR)
(74) Mandataire: Berthier, Karine
(86) Numéro de dépôt international: PCT/FR2000/001089
(87) Numéro de publication internationale: WO 2000/067482

(56) Documents cités:
- EP-A- 0 726 676
- EP-A- 0 868 083
- WO-A-97/18656
- WO-A-98/26593
- FR-A- 2 725 861

## Description

La présente invention se rapporte au domaine général du contrôle d'accès à des informations telles que des données d'images de télévision. Elle concerne plus particulièrement un dispositif de communication à péage, à double désembrouillage.

Dans le cas notamment de la télévision à péage, les dispositifs de communication à péage comportent généralement une chaîne de traitement recevant, en entrée, des données d'images embrouillées, pour délivrer, en sortie, des données d'images désembrouillées, prêtes pour une utilisation directe, par exemple pour leur visualisation à partir d'un téléviseur ou pour leur enregistrement à partir d'un magnétoscope.

De tels dispositifs de communication à péage, connus, comprennent des moyens de traitement capables de procéder au désembrouillage de signaux embrouillés, en vue de leur utilisation directe, ainsi qu'un module de contrôle d'accès conditionnant le fonctionnement de ces moyens de traitement.

Généralement, les utilisateurs détiennent des cartes à mémoire contenant chacune un identifiant d'usager associé à des droits d'accès à plusieurs programmes de télévision à péage, et apte à coopérer chacune avec un module de contrôle d'accès du type précité. Or, l'utilisateur d'un tel dispositif ne peut pas visualiser ou enregistrer actuellement, sur plusieurs téléviseurs ou enregistreurs, les différents programmes pour lesquels il possède pourtant des droits d'accès.

Une solution actuelle connue consiste à prévoir deux dispositifs de communication à péage complètement distincts, avec deux modules de contrôle d'accès distincts, ce qui grève le coût d'une telle utilisation et en augmente la complexité ainsi que l'encombrement à prévoir.

Il est par ailleurs connu du document WO-A-98 26593 d'utiliser un dispositif comprenant plusieurs chaînes de traitement pour fournir des signaux vidéo à différents postes de télévision dans un même logement d'un utilisateur. Toutes les chaînes de traitement utilisent une même unité d'accès conditionnel comprenant une carte à puce unique pour désembrouiller les différents signaux vidéo.

La présente invention vise à améliorer les dispositifs connus de l'art antérieur.

Elle concerne un dispositif de communication à péage, notamment d'images de télévision, du type comprenant au moins deux interfaces d'entrée pour recevoir au moins des premiers et des seconds signaux embrouillés portant des informations sujettes à péage ; au moins deux chaînes de traitement aptes à procéder à la conversion des au moins premiers et seconds signaux embrouillés en au moins des premiers et seconds signaux désembrouillés pour les délivrer à au moins deux interfaces de sortie ; et un module de contrôle d'accès apte à coopérer avec une carte à mémoire pour conditionner le fonctionnement des au moins deux chaînes de traitement.

Dans ce dispositif et selon une caractéristique avantageuse de l'invention, les au moins deux chaînes de traitement comportent au moins des premiers et des seconds moyens de gestion pour piloter les conversions des au moins premiers et seconds signaux embrouillés. Les premiers moyens de gestion sont agencés pour dialoguer avec le module de contrôle d'accès pour activer la conversion des premiers signaux embrouillés et les au moins seconds moyens de gestion sont agencés pour dialoguer avec le module de contrôle d'accès par l'intermédiaire desdits premiers moyens de gestion pour activer la conversion des au moins seconds signaux embrouillés.

Selon une caractéristique optionnelle avantageuse de l'invention, les premiers moyens de gestion sont agencés, d'une part, pour recevoir du module de contrôle d'accès, à intervalles de temps prédéterminés, des premiers et seconds messages de contrôle, pour les conversions respectives des premiers et seconds signaux embrouillés, et, d'autre part, pour transmettre aux seconds moyens de gestion lesdits seconds messages de contrôle.

Avantageusement les premiers et seconds moyens de gestion comportent respectivement un premier et un second processeur, agencés pour piloter respectivement des premiers et seconds modules de désembrouillage des premiers et seconds signaux embrouillés.

Selon une caractéristique particulière de l'invention, le premier processeur est apte à piloter le second processeur suivant un protocole du type maître/esclave.

D'autres avantages et caractéristiques de la présente invention apparaîtront à la lecture de la description détaillée ci-après et des dessins annexés sur lesquels :
- la figure 1 représente schématiquement un dispositif décodeur de la technique antérieure ;
- la figure 2 représente schématiquement un dispositif décodeur selon l'invention ; et
- la figure 3 représente schématiquement une forme de réalisation préférée des dialogues entre les premiers et seconds moyens de gestion précités, et avec le module de contrôle de contrôle d'accès.

La description détaillée ci-après et les dessins annexés contiennent pour l'essentiel des éléments de caractère certain. Ils pourront non seulement servir à mieux faire comprendre la présente invention, mais aussi contribuer à sa définition, le cas échéant.

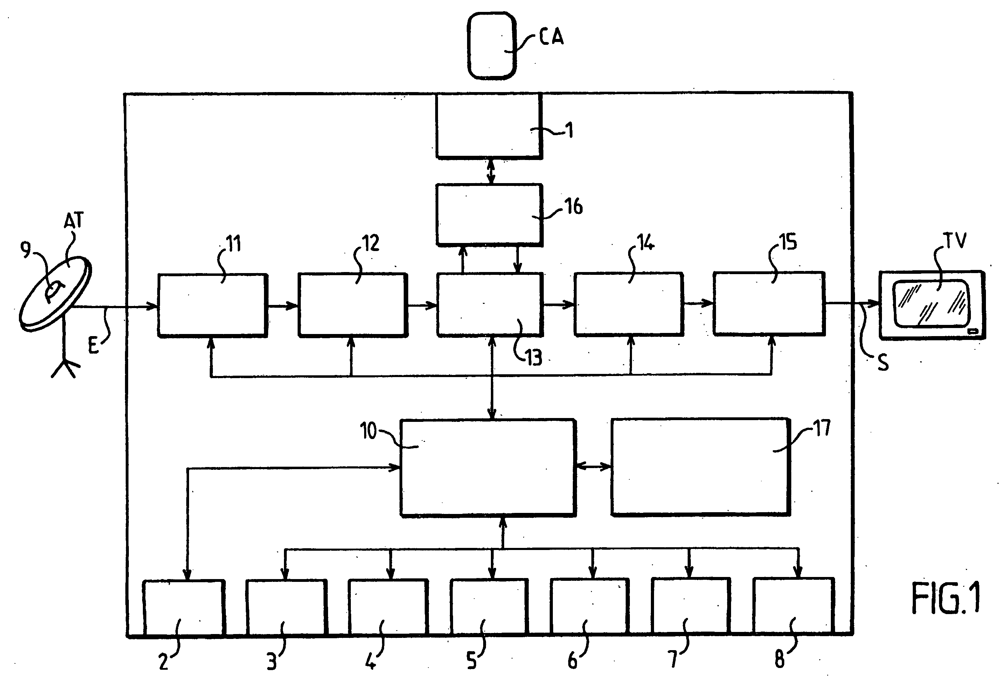

on se réfère tout d'abord à la figure 1 pour décrire un dispositif de communication à péage de la technique antérieure. Dans l'exemple décrit, il s'agit d'un dispositif désembrouilleur de données d'images animées pour télévision numérique, en particulier de type MEDIABOX (marque déposée) et capable de désembrouiller des programmes diffusés par CANALSATELLITE (marque déposée).

Un tel dispositif comporte une interface d'entrée E reliée à une antenne AT apte à communiquer avec une pluralité de satellites. Dans l'application au désembrouillage de programmes de CANALSATELLITE, l'antenne AT reçoit des ondes radiofréquences transmises par les satellites ASTRA et EUTELSAT (marques déposées). Les polarisations des ondes radiofréquences transmises par les satellites sont ici rectilignes. En particulier, il est prévu deux types de polarisations, horizontales et verticales.

Dans l'exemple représenté sur la figure 1, l'antenne AT est de type parabolique. L'interface d'entrée E du dispositif désembrouilleur est reliée à une tête LNB (abréviation du terme anglais "Low Noise Block"), propre à convertir les fréquences des signaux reçus en vue de leur démodulation, généralement à partir d'un oscillateur local et avantageuse ment avec un faible bruit de phase. Cette tête LNB est agencée sensiblement au foyer 9 de la parabole.

Le dispositif désembrouilleur comporte une chaîne de traite ment des données d'images reçues, qui commence par un synthoniseur il relié à l'interface d'entrée E et pour sélectionner un canal désiré dans la gamme de fréquences converties. Ce canal correspond à un programme d'émission auquel l'utilisateur du désembrouilleur a accès et souhaite utiliser pour une visualisation ou un enregistrement.

Le signal en sortie du synthoniseur 11 est ensuite démodulé de façon cohérente (démodulation synchrone) en traversant un étage de démodulation et de correction d'erreurs 12. En pratique, il est effectué un asservissement sur la fréquence et sur la phase de l'oscillateur de la démodulation, à partir d'au moins une boucle à verrouillage de phase.

Dans l'exemple décrit, les données d'images embrouillées sont au format MPEG2 (abréviation des termes anglais "Motion Picture Experts Group"), correspondant à une norme de compression d'images animées. L'étage de démodulation 12 comporte en outre des modules de filtrage et de correction d'erreurs, réalisant des décodages connus de l'homme du métier tels qu'un décodage de VITERBI en présence d'un code convolutif à l'émission, un décodage de REED-SOLOMON, etc. On pourra se référer au livre de Hervé BENOIT : *"La télévision numérique",* ed. DUNOD, Paris, 1998, pour trouver des éléments détaillés, relatifs à de tels décodages.

En sortie de l'étage de démodulation/correction d'erreurs 12, les signaux attaquent un bloc de démultiplexage 13, permettant la sélection, au moyen de filtres choisis, de trains élémentaires de signaux sous forme de paquets au format MPEG2, correspondant au programme choisi par l'utilisateur. Le bloc de démultiplexage 13 est combiné à un module désembrouilleur 16 qui assure la sélection et le désembrouillage des paquets du programme de diffusion choisi.

Le module de désembrouillage communique avec un processeur principal 10, en pratique, par un bus parallèle permettant un transfert rapide de données. Un module de contrôle d'accès 1, apte à coopérer avec une carte à puces CA, fournit une clé de désembrouillage au processeur 10, par exemple sous la forme d'un message de contrôle d'accès CW1 (mots de contrôle), permettant au processeur 10 d'activer le module de désembrouillage 16. En particulier, le processeur 10 dialogue avec le module de contrôle d'accès 1 en émettant des messages d'accès conditionnel ECM1 (pour "Entitlement Control Message") et/ou EMM1 (pour "Entitlement Management Message") et en recevant des messages de contrôle CW1 (pour "Control Word").

Des paquets MPEG désembrouillés, issus du bloc de démultiplexage 13 sont ensuite appliqués à un bloc 14 de décodage MPEG2, qui assure par ailleurs des fonctions de générateur d'écran graphique, et nécessite en pratique une mémoire vive dynamique 17 (DRAM). Les signaux issus du bloc de décodage 14, initialement convertis en signaux numériques en sortie du bloc de démodulation 12, sont reconvertis en signaux analogiques, par un bloc d'encodage vidéo 15. Les signaux vidéo et audio, ainsi rendus disponibles pour une utilisation directe à partir d'un téléviseur ou d'un magnétoscope (TV), sont délivrés vers une interface de sortie S du dispositif désembrouilleur.

L'ensemble des blocs et modules de la chaîne de traitement 11, 12, 13, 14, 15 et 16 est piloté par le processeur 10 qui commande les liaisons entre modules, interprète les ordres en provenance d'une commande à distance (bloc référencé 3 sur la figure 1), gère le lecteur de cartes à puces 1, ainsi que des interfaces de communication généralement présentes, par exemple vers un dispositif d'affichage 4, un modem 5, une liaison PC vers un ordinateur 6, un clavier de saisie 7 et/ou une seconde interface 8 vers un lecteur d'une seconde carte à puce pour d'autres droits d'accès, le cas échéant. Le processeur 10 peut piloter en outre une interface 2, par exemple de liaison série vers une station de développement.

Ainsi, un tel dispositif de la technique antérieure ne peut délivrer des données d'images désembrouillées que pour un seul canal, et vers un seul moyen d'utilisation directe (téléviseur TV dans l'exemple représenté sur la figure 1).

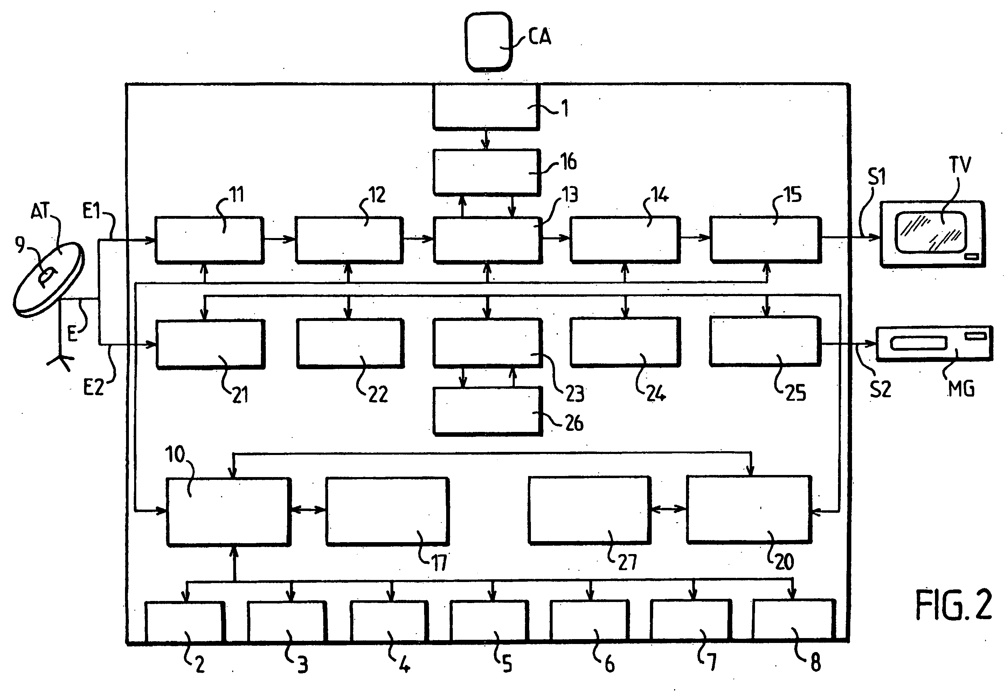

On se réfère maintenant à la figure 2 pour décrire un dispositif de communication à péage selon la présente invention.

Par rapport au dispositif représenté sur la figure 1, ce dispositif comporte globalement deux chaînes de traitement en parallèle. Une chaîne mère comportant les éléments 11 à 16 (synthoniseur, bloc de démodulation, bloc de démultiplexage, module de désembrouillage, bloc de décodage MPEG et bloc d'encodage vidéo), coopère avec un module de contrôle d'accès 1 qui reçoit une clé de désembrouillage d'une carte à puce CA. Un processeur 10 pilote les éléments de cette chaîne mère.

une seconde chaîne (chaîne fille) comporte des éléments semblables : un synthoniseur 21, un bloc de démodulation et de correction d'erreurs 22, un bloc 23 de démultiplexage MPEG qui coopère avec un module de désembrouillage 26, un bloc de décodage MPEG 24 et un bloc d'encodage vidéo 25. Par contre, les différents éléments de la seconde chaîne fille sont pilotés par un second processeur 20 que comporte le dispositif désembrouilleur selon l'invention. Ce processeur 20 est alors agencé pour coopérer avec le processeur 10 de la chaîne mère, notamment pour recevoir la clé de désembrouillage que fournit le module de contrôle d'accès 1. Cette clé de désembrouillage est transmise au module de désembrouillage 26 de la chaîne fille et les deux chaînes mère et fille peuvent ainsi opérer indépendamment l'une de l'autre, pour le décodage de canal à l'aide des synthoniseurs 11 et 21, pour les démodulations et corrections d'erreurs en 12 et 22, pour le démultiplexage MPEG en 13 et 23, le décodage MPEG en 14 et 24 et enfin l'encodage vidéo en 15 et 25.

L'un des avantages que procure alors l'invention est de fournir deux sorties (interfaces de sorties S1 et S2), indépendantes, aptes à délivrer des données d'images issues de canaux différents et correspondants à des programmes différents pour lesquels l'utilisateur a un droit d'accès par la carte à puce CA. Ainsi, l'utilisateur peut à la fois visualiser un programme sur un téléviseur TV et enregistrer un programme différent à partir d'un magnétoscope MG, et ce, à partir d'une seule carte à mémoire CA et d'un seul module de contrôle d'accès 1.

Dans l'exemple décrit, l'antenne AT peut communiquer avec deux satellites du type précité (ASTRA et EUTELSAT). Ainsi, un utilisateur pourrait souhaiter visualiser un programme que diffuse un satellite et enregistrer un programme que diffuse l'autre satellite. La demanderesse s'est alors trouvée confrontée à une difficulté liée à la réception de programmes radiodiffusés par deux sources (satellites) différentes.

Avantageusement, le foyer 9 de l'antenne parabolique AT comporte alors quatre têtes LNB, reliées à l'entrée E du dispositif selon l'invention :
- deux têtes pour des polarisations respectives horizontales et verticales d'ondes radiofréquences provenant du satellite ASTRA et
- deux têtes pour des polarisations respectives horizontales et verticales d'ondes radiofréquences provenant du satellite EUTELSAT.

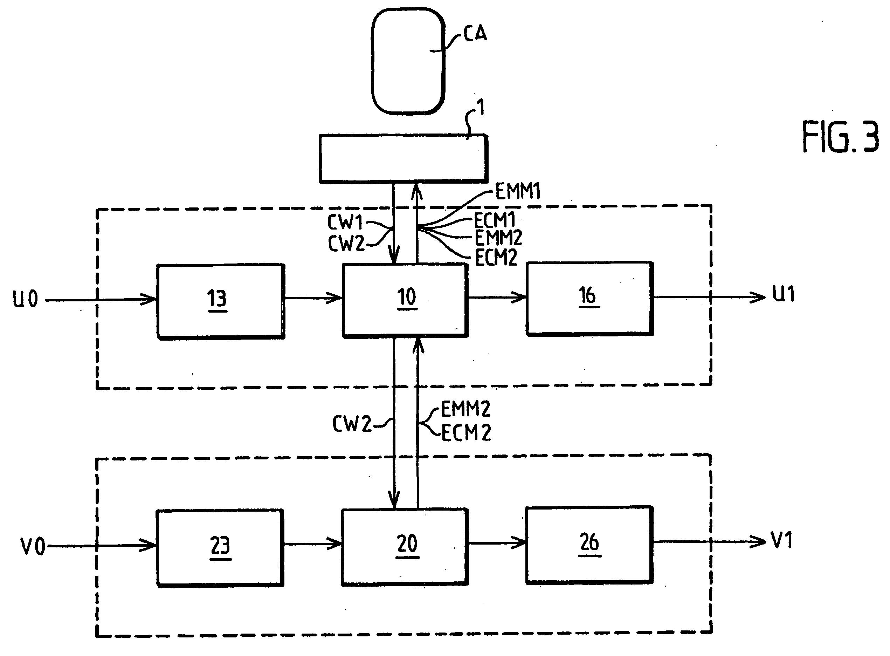

Préférentiellement, le processeur de la chaîne mère 10 transmet au processeur de la chaîne fille 20, la clé de désembrouillage qu'il tire du module de contrôle d'accès 1, en vue d'activer le module de désembrouillage 26 de la chaîne fille. Ainsi, le processeur 20 ne pilote que les opérations de conversion (démodulation, démultiplexage, désembrouillage, décodage MPEG/encodage video) qu'effectue la chaîne fille, et présente alors un nombre d'applications restreint par rapport au processeur 10. on se réfère maintenant à la figure 3 pour décrire le dialogue du processeur 10 de la chaîne mère avec le processeur 20 de la chaîne fille, d'une part, et avec le module de contrôle d'accès 1, d'autre part.

En sortie du bloc de démultiplexage 13 de la chaîne mère, le processeur 10 reçoit des signaux portant des informations relatives à des conditions d'accès prédéterminées. Ces signaux, initialement contenus dans les paquets multiplexés U0 entrant dans le bloc de démultiplexage 13, sont interprétés et mis en forme par le processeur 10 qui délivre alors les messages d'accès conditionnel précités ECM1 et EMM1.

Parallèlement, en sortie du bloc de démultiplexage 23 de la chaîne fille, le processeur 20 reçoit des signaux portant des informations relatives à des conditions d'accès prédéterminées. Ces signaux, initialement contenus dans les paquets multiplexés V0 entrant dans le bloc de démultiplexage 23, sont interprétés et mis en forme par le processeur 20 qui délivre alors les messages d'accès conditionnel précités ECM2 et EMM2.

Le processeur 20 de la chaîne fille délivre les messages ECM2 et EMM2 au processeur 10 de la chaîne mère. Le processeur 10 de la chaîne mère délivre les messages ECM1 et EMM1, ainsi que les messages ECM2 et EMM2 du processeur 20, au module de contrôle d'accès 1.

La mémoire de la carte à puce CA contient une clé de désembrouillage de programmes que les deux chaînes de traitement sont aptes à désembrouiller. Le module de contrôle d'accès 1 interprète cette clé de désembrouillage et transmet au processeur 10 de la chaîne mère deux ensembles de mots de contrôle CW1 et CW2 destinés aux désembrouillages des signaux traversant respectivement la chaîne mère et la chaîne fille. Préférentiellement, les mots de contrôle CW1 et CW2 sont des fonctions cryptographiques à clé symétrique et dépendent avantageusement d'une seule clé de désembrouillage K, d'une part, et des messages de contrôle associés, d'autre part, respectivement ECM1, EMM1 et ECM2, EMM2.

En pratique, ces mots de contrôle sont émis vers le processeur 10 à intervalles de temps réguliers, typiquement toutes les cinq secondes, ou encore toutes les deux secondes. Le processeur 10 transmet à son tour les mots de contrôle CW2 au processeur 20 de la chaîne fille.

Le processeur 10 de la chaîne mère, dès réception des mots de contrôle CW1 active le modulé de désembrouillage 16 pour délivrer des signaux portant des données d'images désembrouillées U1. Pour la chaîne fille, le processeur 20, dès réception des mots de contrôle CW2, active le module de désembrouillage 26 pour délivrer des signaux portant des données d'images désembrouillées V1.

Ainsi, le processeur 10 met en forme les messages d'accès conditionnel ECM1 et EMM1, reçoit du processeur 20 ses messages d'accès conditionnel ECM2 et EMM2 et interroge le module de contrôle d'accès 1. En retour, le module de contrôle d'accès 1 délivre vers le processeur 10 les mots de contrôle CW1 et CW2. Le processeur 10 active ou non, en fonction des mots CW1, le module désembrouilleur 16 de la chaîne mère. Suivant un protocole de type maître/esclave, le processeur 10 (maître) dialogue avec le processeur 20 (esclave) en transmettant à celui-ci les mots de contrôle CW2, pour activer ou non, en fonction des mots CW2, le module de désembrouillage 26 de la chaîne fille.

Plus particulièrement, le processeur 10 gère l'envoi séquen tiel des messages ECM1, ECM2, EMM1 et EMM2, ainsi que des messages relatifs aux programmes visualisés et/ou enregistrés, vers le module de contrôle d'accès 1, et reçoit en retour les mots de contrôle CW1 et CW2 qu'il trie pour l'envoi vers le module désembrouilleur 16 et vers le processeur 20.

Le processeur 10 de la chaîne mère pilote ainsi les éléments 11 à 16 de cette chaîne de traitement, ainsi que la mémoire 17 comprenant par exemple des logiciels de type "MEDIAHIGH-WAY" (marque déposée) pour gérer le protocole opératoire (démodulation, correction d'erreurs, démultiplexage MPEG, désembrouillage, décodage MPEG et encodage vidéo), et/ou un logiciel de type "MEDIAGUARD" (marque déposée) pour dialoguer avec la carte CA d'abonnement "Canalsatellite", avec laquelle le processeur 10 gère les clés de désembrouillage, tant pour le programme visualisé que pour le programme à enregistrer. En particulier, des versions nouvelles de ces logiciels sont prévues pour le dispositif selon l'invention, permettant en outre au processeur maître 10 la fonction de gestion du processeur esclave 20 suivant un protocole de type maître/esclave, ainsi que des fonctions optionnelles telles que l'autorisation d'enregistrement d'un programme différent de celui visualisé, la commande de démarrage et d'arrêt d'enregistrement, etc.

Le processeur 10 de la chaîne mère dans le dispositif selon l'invention, assure en outre la gestion des liaisons périphériques 2 à 8. En particulier, il peut être prévu un programmateur infrarouge en sortie S2 de la chaîne fille (d'enregistrement dans l'exemple), piloté par le processeur 10 en vue de programmer directement le magnétoscope MG.

Bien entendu, la présente invention ne se limite pas à la forme de réalisation décrite ci-avant à titre d'exemple. Elle s'étend à d'autres variantes.

On comprendra ainsi que la sortie S2 peut être reliée à un second téléviseur, si, dans un foyer, des utilisateurs possédant les droits d'accès souhaitent visualiser deux programmes différents. En particulier, il peut être prévu de remoduler les signaux audio/video en sortie du bloc d'encodage 25 (interface de sortie S2), pour une transmission par câble coaxial vers le second téléviseur.

Il peut être prévu en outre deux sorties S1 et S2 vers un même téléviseur, s'il est souhaité en particulier de visualiser deux programmes à la fois, par exemple sur un écran d'affichage partitionné (mosaïque). En particulier, le dispositif selon l'invention peut comporter une pluralité de chaînes de traitement filles dont les processeurs esclaves dialoguent avec un processeur maître d'une chaîne mère, suivant un protocole maître/esclave du type décrit ci-avant.

La liaison des interfaces d'entrée E1 et E2 du dispositif décrit ci-avant, avec une antenne parabolique AT est décrite ici à titre d'exemple. En variante, cette liaison de réception peut être effectuée par câble, ou par voie hertzienne.

Le format de compression de données d'images animées, de type MPEG2 , est décrit ci-avant à titre d'exemple. En variante, ce format peut être encore de type MPEG1, de type MPEG4 (version plus récente), ou autre.

L'invention s'applique, bien entendu, à tout type de dispositif de communication.à péage et contrôle d'accès, permettant de visualiser des programmes autres que ceux diffusés par "Canalsatellite". De manière générale, elle s'applique à un dispositif comportant des moyens de traitement dédoublés de signaux embrouillés, portant éventuellement des informations autres que des données d'images.

Enfin, les différentes liaisons périphériques 2 à 8 représentées sur les figures 1 et 2 sont décrites ci-avant à titre d'exemples. Elles sont susceptibles de variantes, suivant les applications visées. De manière plus générale, l'architecture des protocoles de traitement décrits ci-avant est illustrée à titre d'exemple. En particulier, les tâches qui incombent respectivement aux processeurs 10 et 20 sont susceptibles de variantes.

## Revendications

1. Dispositif de communication à péage, notamment d'images de télévision, du type comprenant
au moins deux interfaces d'entrée (E1, E2) pour recevoir au moins des premiers et des seconds signaux embrouillés portant des informations sujettes à péage ;
au moins deux chaînes de traitement (11, 12, 13, 14, 15, 16 ; 21, 22, 23, 24, 25, 26) aptes à procéder à la conversion des au moins premiers et seconds signaux embrouillés en au moins des premiers et seconds signaux désembrouillés pour les délivrer à au moins deux interfaces de sortie (S1, S2) ; et
un module de contrôle d'accès (1) apte à coopérer avec une carte à mémoire (CA) pour conditionner le fonctionnement des au moins deux chaînes de traitement,
**caractérisé en ce que** les au moins deux chaînes de traitement comportent au moins des premiers et des seconds moyens de gestion (10, 20) pour piloter les conversions des au moins premiers et seconds signaux embrouillés et **en ce que**
les premiers moyens de gestion (10) sont agencés pour dialoguer avec le module de contrôle d'accès (1) pour activer la conversion des premiers signaux embrouillés ; et
les au moins seconds moyens de gestion (20) sont agencés pour dialoguer avec le module de contrôle d'accès (1) par l'intermédiaire desdits premiers moyens de gestion (10) pour activer la conversion des au moins seconds signaux embrouillés.

2. Dispositif selon la revendication 1, **caractérisé en ce que** les premiers moyens de gestion (10) sont agencés, d'une part, pour recevoir du module de contrôle d'accès (1), à intervalles de temps prédéterminés, des premiers et seconds messages de contrôle (CW1, CW2), pour les conversions respectives des premiers et seconds signaux embrouillés, et, d'autre part, pour transmettre aux seconds moyens de gestion (20) lesdits seconds messages de contrôle (CW2).

3. Dispositif selon la revendication 2, **caractérisé en ce que** les premiers et seconds moyens de gestion comportent respectivement un premier (10) et un second (20) processeur, agencés pour piloter respectivement des premiers et seconds modules de désembrouillage (16, 26) des premiers et seconds signaux embrouillés.

4. Dispositif selon la revendication 3, **caractérisé en ce que** le premier processeur (10) est apte à piloter le second processeur (20) suivant un protocole du type maître/esclave.

5. Dispositif selon l'une des revendications précédentes, **caractérisé en ce que** les première et seconde interfaces d'entrée (E1, E2) sont reliées à des moyens de réception d'ondes radiofréquence (9) et **en ce que** les première et seconde chaînes de traitement comportent des convertisseurs de fréquence adaptés chacun à une polarisation des ondes radiofréquence transmises par un satellite.

## Patentansprüche

1. Vorrichtung zur Gebührenkommunikation, insbesondere von Fernsehbildern, vom Typ mit
wenigstens zwei Eingangsschnittstellen (E1, E2) zum Empfang von wenigstens ersten und zweiten verwürfelten Signalen, die gebührenpflichtige Informationen übertragen,
wenigstens zwei Verarbeitungswegen (11, 12, 13, 14, 15, 16; 21, 22, 23, 24, 25, 26) zur Umsetzung der wenigstens ersten und zweiten verwürfelten Signale in wenigstens erste und zweite entwürfelte Signale, um sie an wenigstens zwei Ausgangsschnittstellen (S1, S2) zu liefern, und
einem Modul (1) zur Zugriffsteuerung zum Zusammenarbeiten mit einer Speicherkarte (CA) zur Steuerung der Funktion der wenigstens zwei Verarbeitungswege,
**dadurch gekennzeichnet, dass**
die wenigstens zwei Verarbeitungswege wenigstens erste und zweite Steuermittel (10, 20) zur Steuerung der Umsetzung der wenigstens ersten und zweiten verwürfelten Signale enthalten und dass
die ersten Steuermittel (10) mit dem Modul (1) zur Zugriffsteuerung zusammenarbeiten, um die Umsetzung der ersten verwürfelten Signale zu aktivieren, und
die wenigstens zweiten Steuermittel (20) mit dem Modul (1) zur Zugriffsteuerung über die ersten Steuermittel (10) zusammenarbeiten, um die Umsetzung der wenigstens zweiten verwürfelten Signale zu aktivieren.

2. Vorrichtung nach Anspruch 1, **dadurch gekennzeichnet, dass** ersten Steuermittel (10) einerseits von dem Modul (1) zur Zugriffsteuerung bei vorbestimmten Zeitintervallen erste und zweite Steuernachrichten (CW1, CW2) für die Umsetzungen der ersten bzw. zweiten verwürfelten Signale und andererseits zur Übertragung der zweiten Steuernachrichten (CW2) zu den zweiten Steuermitteln (20) empfangen.

3. Vorrichtung nach Anspruch 2, **dadurch gekennzeichnet, dass** die ersten und zweiten Steuermittel einen ersten (10) und einen zweiten (20) Prozessor zur Steuerung des ersten bzw. zweiten Moduls (16, 26) zur Entwürfelung des ersten bzw. zweiten verwürfelten Signals enthalten.

4. Vorrichtung nach Anspruch 3, **dadurch gekennzeichnet, dass** der erste Prozessor (10) den zweiten Prozessor (20) entsprechend einem Protokoll vom Typ Master/Slave steuert.

5. Vorrichtung nach einem der vorangehenden Ansprüche, **dadurch gekennzeichnet, dass** die ersten und die zweiten Eingangsschnittstellen (E1, E2) mit Mitteln zum Empfang von Hochfrequenzwellen (9) verbunden sind und dass der erste und der zweite Verarbeitungsweg Frequenzumsetzer jeweils für eine Polarisation von durch einen Satelliten übertragenen Hochfrequenzwellen enthält.

## Claims

1. Pay-per-use communication device, in particular for television pictures, of the type comprising
at least two input interfaces (E1, E2) for receiving at least first and second scrambled signals bearing information subject to pay-per-use;
at least two processing pathways (11, 12, 13, 14, 15, 16; 21, 22, 23, 24, 25, 26) able to undertake the conversion of at least first and second scrambled signals into at least first and second descrambled signals so as to deliver them to at least two output interfaces (S1, S2); and
an access control module (1) able to cooperate with a memory card (CA) for conditioning the operation of the at least two processing pathways,
**characterized in that** the at least two processing pathways comprise at least first and second management means (10, 20) for driving the conversions of the at least first and second scrambled signals and **in that**
the first management means (10) are arranged so as to talk to the access control module (1) so as to activate the conversion of the first scrambled signals; and
the at least second management means (20) are arranged so as to talk to the access control module (1) by way of said first management means (10), so as to activate the conversion of the at least second scrambled signals.

2. Device according to Claim 1, **characterized in that** the first management means (10) are devised, on the one hand, to receive from the access control module (1), at predetermined time intervals, first and second control messages (CW1, CW2), for the respective conversions of the first and second scrambled signals, and, on the other hand, to transmit said second control messages (CW) to the second management means (20).

3. Device according to Claim 2, **characterized in that** the first and second management means respectively comprise a first (10) and a second (20) processor, which are devised so as to respectively drive first and second descrambling modules (16, 26) for descrambling the first and second scrambled signals.

4. Device according to Claim 3, **characterized in that** the first processor (10) is able to drive the second processor (20) according to a protocol of the master/slave type.

5. Device according to one of the preceding claims, **characterized in that** the first and second input interfaces (E1, E2) are linked to means for receiving radiofrequency waves (9) and **in that** the first and second processing pathways comprise frequency converters each adapted to a polarization of the radiofrequency waves transmitted by a satellite.
